## Europäisches Patentamt

## European Patent Office

## Office européen des brevets

(19)

(11) Veröffentlichungsnummer: **0 037 017 B1**

(12)

# EUROPÄISCHE PATENTSCHRIFT

(45) Veröffentlichungstag der Patentschrift:
29.08.84

(51) Int. Cl.³: **A 23 D 5/00, C 11 C 3/08**

(21) Anmeldenummer: **81102055.1**

(22) Anmeldetag: **19.03.81**

(54) **Fett mit milchfettähnlichen Eigenschaften und Verfahren zu seiner Herstellung.**

(30) Priorität: **27.03.80 DE 3011807**

(43) Veröffentlichungstag der Anmeldung:
**07.10.81 Patentblatt 81/40**

(45) Bekanntmachung des Hinweises auf die Patenterteilung:
**29.08.84 Patentblatt 84/35**

(84) Benannte Vertragsstaaten:
**BE DE FR GB IT NL**

(56) Entgegenhaltungen.
**DE - C - 407 180**
**FR - A - 2 306 257**
**GB - A - 160 840**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Heine, Christian, Dr., Habichtstrasse 4, D-4019 Monheim (DE)**
Erfinder: **Wüst, Reinhold, Jahnstrasse 23, D-4044 Kaarst (DE)**

## Beschreibung

Die üblichen Speisefette, außer Milchfett, enthalten keine Buttersäure. Im Milchfett liegt der Buttersäuregehalt bei 3,5—4,5%.

Der Erfindung liegt die Aufgabe zugrunde, ein Fett mit den charakteristischen Eigenschaften des Milchfettes aus in großen Mengen vorhandenen tierischen und/oder pflanzlichen Fetten herzustellen, das als preisgünstiger Ersatz für natürliches Milchfett dienen kann und sich zugleich durch eine erhöhte Lagerstabilität auszeichnet.

Es wurde bereits vorgeschlagen, milchfettähnliche Produkte durch Umesterung von verschiedenen Fettstoffen mit Glycerintributyrat herzustellen (DE-A-2 614 574). Ein wesentlicher Nachteil dieses Verfahrens besteht jedoch darin, daß zunächst eine Veresterung zur Herstellung des Tributyrats und dann eine Umesterung, jeweils mit den nachfolgenden Raffinationsschritten, durchgeführt werden muß. Zudem bleiben bei der Umesterung statistisch zu berechnende Reste an Tributyrin erhalten, die unerwünscht sind und nur schwer restlos entfernt werden können.

Gegenstand der Erfindung ist ein Fett mit milchfettähnlichen Eigenschaften, gekennzeichnet durch folgende Zusammensetzung:

(A) 10—50 Gew.-% eines Fettsäure-Buttersäure-Triglycerids, hergestellt durch Veresterung eines im wesentlichen $C_{16}$—$C_{20}$-Fettsäuren enthaltenden Fettsäuremonoglycerids und/oder Fettsäurediglycerids mit Buttersäure und/oder Buttersäureanhydrid,

(B) 50—90 Gew.-% von im wesentlichen $C_{12}$—$C_{20}$-Fettsäuren enthaltenden, gegebenenfalls gehärteten Fetten oder Ölen oder deren Mischungen

sowie ein Verfahren zur Herstellung eines Fettes mit milchfettähnlichen Eigenschaften durch direkte Veresterung eines im wesentlichen $C_{16}$—$C_{20}$-Fettsäuren enthaltenden Fettsäuremonoglycerids und/oder Fettsäurediglycerids mit Buttersäure und/oder Buttersäureanhydrid und Vermischen dieses Veresterungsproduktes mit einem im wesentlichen $C_{12}$—$C_{20}$-Fettsäuren enthaltenden, gegebenenfalls gehärteten Fett oder Öl.

Die Herstellung der Komponente (A) erfolgt in an sich bekannter Weise durch direkte Veresterung eines im wesentlichen $C_{16}$—$C_{20}$-Fettsäuren enthaltenden Fettsäuremono- und/oder -diglycerids mit Buttersäure und/oder Buttersäureanhydrid. Als besonders günstig hat sich ein Produkt erwiesen, das durch Veresterung von 1 Mol eines molekulardestillierten $C_{16}$—$C_{18}$-Fettsäuremonoglycerids mit 2 Mol Buttersäure und/oder Buttersäureanhydrid erhalten wird. Die Veresterung mit Buttersäure wird z. B. in Gegenwart von Veresterungskatalysatoren, wie Zinnschliff, bei Temperaturen von 120—150°C und Abdestillieren des Reaktionswassers mit Hilfe eines wasserunlöslichen Lösungsmittels, vorzugsweise Toluol durchgeführt. Zur Beseitigung von Restmengen an Buttersäure wird eine Vollraffination — Entsäuerung, Bleichung und Desodorierung — mit Adsorptionsmitteln, z. B. Bleicherde, durchgeführt. Die Veresterungsprodukte sind öl- oder fettartig und weisen einen neutralen Geruch und Geschmack auf.

Die Komponente (A) kann ferner erhalten werden durch Veresterung des Mono- und/oder Diglycerids mit Buttersäureanhydrid unter Erwärmen bis auf 180°C und langsamer Zugabe des Anhydrids. Restmengen an Buttersäureanhydrid und evtl. entstandener Buttersäure werden unter Vakkum abdestilliert bzw. durch eine Vollraffination beseitigt.

Als Komponente (B) finden im wesentlichen $C_{12}$—$C_{20}$-Fettsäuren enthaltende, gegebenenfalls gehärtete Fette oder Öle, sowie deren Mischungen, Verwendung. Besonders geeignet hierzu sind z. B. Kokosöl, Palmkernöl, Palmöl, Sojaöl, Sonnenblumenöl, gehärtetes Palmöl, Rindertalg usw. beziehungsweise durch Härtung oder Raffination gewonnene Produkte. Vorzugsweise werden Fettmischungen verwendet, die in ihrer Fettsäurezusammensetzung derjenigen des Butterfettes nahekommen, d. h. solche Fettmischungen, die eine hinreichende Menge an $C_6$—$C_{10}$-Fettsäuren enthalten. Eine geeignete Mischung besteht z. B. aus einer Palmöl-Flüssigfraktion (Schmelzbereich 20—22°C), gehärtetem Palmöl (Schmelzbereich 40—42°C), Kokosöl und Sojaöl im Verhältnis 1,5—2 : 1 : 0,3—0,5 : 0,8—1,2. Zur genaueren Anpassung an die Fettsäurezusammensetzung natürlicher Butter können Triglyceride mit einem Gehalt an kurzkettigen Fettsäuren, z. B. Kokosvorlauffettsäure, sowie höhere Anteile an $C_{14}$-Fettsäure enthaltende Fettfraktion, zugemischt werden. Dies kann auch durch Erhöhung des Kokosölanteils in der vorgenannten Mischung erreicht werden. Der gewünschte Buttersäuregehalt wird durch Einmischen einer entsprechenden Menge der Komponente (A) eingestellt; er beträgt bei natürlichem Butterfett etwa 3,5—4,5%.

Der Anteil der Komponente (A) in der Fettmischung kann zwischen 10 und 50 Gew.-% liegen, insbesondere erfordert die Verwendung von Difettsäuremonobutyrat als Komponente (A) eine höhere Einsatzmenge. Bevorzugt wird ein Mischungsverhältnis von 12—18 Gew.-% Monofettsäuredibutyrat als Komponente (A) zu 82—88 Gew.-% eines Fettes oder einer Fettmischung als Komponente (B). Durch nachfolgende Umesterung der Gesamtmischung können die Buttersäurereste statistisch auf die Triglyceridmoleküle verteilt werden.

Beispiel

Ein Speisefett mit milchfettähnlichen Eigenschaften für die Nahrungsmittelindustrie, insbesondere für die Backwarenherstellung, hat folgende Zusammensetzung:

|  | Gew.-% |
|---|---|
| Schweineschmalzmonoglycerid-dibutyrat | 15 |
| Palmöl-Flüssigfraktion, 20–22°C, raffiniert | 37 |
| Palmöl gehärtet, 40–42°C, raffiniert | 20 |
| Kokosöl, raffiniert | 8 |
| Sojaöl, raffiniert | 20 |

Die Komponenten werden in einen Rührbehälter gegeben, auf 50°C erwärmt und nach gutem Durchmischen in die vorgesehenen Verpackungsbehälter abgefüllt. Das Speisefett besitzt eine goldgelbe Farbe, hat bei Raumtemperatur eine grobkristalline Konsistenz und ist geruchs- und geschmacksneutral.

Zusammensetzung und Eigenschaften der Fettmischung in Vergleich zu natürlichem Butterfett sind aus der nachfolgenden Tabelle zu ersehen:

|  | Speisefett gemäß Beispiel | Milchfett |
|---|---|---|
| **Kenndaten:** | | |
| Äußere Beschaffenheit bei Raumtemperatur | Gelbes, pastöses Fett | Gelbes pastöses Fett |
| Geschmack/Geruch | Neutral, etwas nach Butter | Nach Butter |
| Säurezahl | 0,4 | max. 3 |
| Verseifungszahl | 238 | 220–250 |
| Jodzahl nach Kaufmann | 48 | 25– 50 |
| Buttersäurezahl, DGF | 23 | 18– 24 |
| Steigschmelzpunkt, °C | 31,0 | 28– 34 |
| **Fettsäurezusammensetzung in %:** | | |
| C 4 | 4,2 | 3,5– 4,5 |
| C 6 | 0,5 | 2– 4 |
| C 8 | 1,0 | 1– 2 |
| C 10 | 1,0 | 1– 3 |
| C 12 | 2,8 | 2– 4 |
| C 14 | 2,0 | 8– 12 |
| C 14 einfach ungesättigt | 0,5 | 1 |
| C 16 | 22 | 20– 30 |
| C 16 einfach ungesättigt | 5 | 3– 5 |
| C 18 | 19 | 8– 12 |

Tabelle (Fortsetzung)

| | Speisefett gemäß Beispiel | Milchfett |
|---|---|---|
| C 18 einfach ungesättigt | 29 | 20 — 30 |
| C 18 zweifach ungesättigt | 6 | 2 — 8 |
| C 18 dreifach ungesättigt | 4 | 1 — 6 |
| C 20 + C 22 | 3 | 1 — 6 |

**Patentansprüche**

1. Fett mit milchfettähnlichen Eigenschaften, gekennzeichnet durch folgende Zusammensetzung:

(A) 10—50 Gew.-% eines Fettsäure-Buttersäure-Triglycerids, hergestellt durch Veresterung eines im wesentlichen $C_{16}-C_{20}$-Fettsäuren enthaltenden Fettsäuremonoglycerids und/oder Fettsäurediglycerids mit Buttersäure und/oder Buttersäureanhydrid,

(B) 50—90 Gew.-% von im wesentlichen $C_{12}-C_{20}$-Fettsäuren enthaltenden, gegebenenfalls gehärteten Fetten oder Ölen oder deren Mischungen.

2. Fett nach Anspruch 1, dadurch gekennzeichnet, daß die Zusammensetzung 12—18 Gew.-% der Komponente (A) und 82—88 Gew.-% der Komponente (B) beträgt.

3. Fett nach Anspruch 1 und 2 mit einem Gehalt von 3—5% Buttersäure, bezogen auf Gesamtfettsäuren.

4. Fett nach Anspruch 1—3, gekennzeichnet durch einen zusätzlichen Gehalt an $C_6-C_{10}$-Fettsäuren, wobei die Fettsäurezusammensetzung derjenigen des natürlichen Butterfetts angepaßt ist.

5. Verfahren zur Herstellung eines Fettes mit milchfettähnlichen Eigenschaften entsprechend Anspruch 1—4, dadurch gekennzeichnet, daß man

(A) 10—50 Gew.-% eines Fettsäure-Buttersäure-Triglycerids, hergestellt durch direkte Veresterung eines im wesentlichen $C_{16}-C_{20}$-Fettsäuren enthaltenden Fettsäuremonoglycerids und/oder Fettsäurediglycerids mit Buttersäure und/oder Buttersäureanhydrid, mit

(B) 50—90 Gew.-% eines im wesentlichen $C_{12}-C_{20}$-Fettsäuren enthaltenden, gegebenenfalls gehärtetes Fettes oder Öls oder deren Mischungen, vermischt.

6. Verfahren zur Herstellung eines Fettes nach Anspruch 5, dadurch gekennzeichnet, daß man dessen Fettsäurezusammensetzung an diejenige des natürlichen Butterfets durch Zumischen von $C_6-C_{10}$-Fettsäuren enthaltenden Triglyceriden und gegebenenfalls höhere Anteile an $C_{14}$-Fettsäuren enthaltenden Fettfraktionen anpaßt.

7. Verfahren nach Anspruch 5 und 6, dadurch gekennzeichnet, daß man die Gesamtmischung umestert.

**Claims**

1. A fat having milk-fat-like properties, characterized by the following composition:

(A) 10 to 50% by weight of a fatty acid-butyric acid triglyceride produced by esterifying a fatty acid monoglyceride and/or fatty acid diglyceride essentially containing $C_{16}-C_{20}$-fatty acids with butyric acid and/or butyric acid anhydride,

(B) 50 to 90% by weight of optionally hardened fats or oils essentially containing $C_{12}-C_{20}$-fatty acids, or mixtures thereof.

2. A fat as claimed in Claim 1, characterized in that the composition comprises from 12 to 18% by weight of component (A) and from 82 to 88% weight of component (B).

3. A fat as claimed in Claims 1 and 2 concaining from 3 to 5% of butyric acid, based on total fatty acids.

4. A fat as claimed in Claims 1 to 3, characterized by an additional content of $C_6-C_{10}$-fatty acids, the fatty acid composition being adapted to that of natural butter fat.

5. A process for producing the fat having milk-fat-like properties claimed in Claims 1 to 4, characterized in that

(A) from 10 to 50% by weight of a fatty acid/butyric acid triglyceride obtained by the direct esterification of a fatty acid monoglyceride and/or fatty acid diglyceride essentially containing $C_{16}-C_{20}$-fatty acids with butyric acid and/or butyric acid anhydride are mixed with

(B) from 50 to 90% by weights of an optionally hardened fat or oil essentially containing $C_{12}-C_{20}$-fatty acids, or mixtures thereof.

6. A process for producing a fat as claimed in Claim 5, characterized in that its fatty acid composition is adapted to that of natural butter fat by the addition of triglycerides containing $C_6-C_{10}$-fatty acids and, optionally, higher proportions of fatty fractions containing $C_{14}$-fatty acids.

7. A process as claimed in Claims 5 and 6, characterized in that the mixture as a whole is transesterified.

**Revendications**

1. Graisse ayant des propriétés similaires à celles de la graisse de lait, caractérisée par la composition suivante:

(A) 10 à 50% en poids d'un triglycéride-acide butyrique-acide gras, préparé par estérification d'un monoglycéride gras contenant essentiellement des acides gras en $C_{16}-C_{20}$ et/ou d'un diglycéride d'acide gras avec de l'acide butyrique et/ou de l'anhydride butyrique,

(B) 50 à 90% en poids de graisses ou huiles éventuellement durcies, contenant essentiellement des acides gras en $C_{12}-C_{20}$, ou leurs mélanges.

2. Graisse selon la revendication 1, caractérisée en ce que la composition s'élève à 12—18% en poids du composant (A) et à 82—88% en poids du composant (B).

3. Graisse selon les revendications 1 et 2 ayant une teneur de 3 à 5% en acide butyrique par rapport aux acides gras totaux.

4. Graisse selon les revendications 1 à 3, caractérisée par une teneur supplémentaire en acides gras en $C_6-C_{10}$, la composition des acides gras étant adaptée à celle de la graisse de beurre naturelle.

5. Procédé de préparation d'une graisse ayant des propriétés similaires à celles de la graisse de beurre selon les revendications 1 à 4, caractérisé en ce qu'on mélange:

(A) 10 à 50% en poids d'un triglycéride acide butyrique-acide gras, préparé par estérification directe d'un monoglycéride d'acide gras contenant essentiellement des acides gras en $C_{16}-C_{20}$ et/ou d'un diglycéride d'acide gras avec de l'acide butyrique et/ou de l'anhydride butyrique, avec

(B) 50—90% en poids d'une graisse ou huile éventuellement durcie, contenant essentiellement des acides gras en $C_{12}-C_{20}$, ou leurs mélanges.

6. Procédé de préparation d'une graisse selon la revendication 5, caractérisé en ce qu'on adapte sa composition des acides gras à celle de la graisse de beurre naturelle en y mélangeant des triglycérides contenant des acides gras en $C_6-C_{10}$ et éventuellement des proportions plus élvées de fractions grasses contenant des acides gras en $C_{14}$.

7. Procédé selon les revendications 5 et 6, caractérisé en ce qu'on transestérifie le mélange global.